# EUROPÄISCHE PATENTANMELDUNG

(11) **EP 0 826 951 A1**
(43) Veröffentlichungstag der Anmeldung: **04.03.1998**
(21) Anmeldenummer: 97113823.5
(22) Anmeldetag: 11.08.1997
(51) Int. Cl.: G01K 7/42

(54) **Sensorsystem mit PT1-Messelement**

(30) Priorität: 26.08.1996 DE 19634368
(71) Anmelder: DAIMLER-BENZ AKTIENGESELLSCHAFT, 70567 Stuttgart (DE)
(72) Erfinder: Berger, Alexander, 73035 Göppingen (DE); Ott, Harald, 74343 Sachsenheim (DE)

(57) **Zusammenfassung**

Die Erfindung bezieht sich auf ein Sensorsystem mit einem Meßelement, das ein PT1-Verhalten aufweist, z.B. ein Motoröltemperaturfühler bei einem Verbrennungsmotor eines Kraftfahrzeuges.

Erfindungsgemäß ist eine dem Meßelement nachgeschaltete Meßwertauswerteeinheit vorgesehen, welche zu den vom Meßelement gelieferten Meßwerten einen Korrekturwert addiert, der gleich dem Produkt der Meßelement-Zeitkonstante mit einem gleitenden Steigungsmittelwert der nacheinander aufgenommenen Meßwerte ist. Damit vermag das Sensorsystem die zu messende Größe insbesondere auch bei raschen dynamischen Änderungen derselben mit einem relativ einfach ausgelegten Meßelement vergleichsweise zuverlässig zu erfassen.

Verwendung z.B. als Sensorsystem zur Motoröltemperaturerfassung bei Verbrennungsmotoren von Kraftfahrzeugen.

## Beschreibung

Die Erfindung bezieht sich auf ein Sensorsystem mit einem Meßelement, das ein PT1-Verhalten zeigt. In diese Gruppe sogenannter Meßelemente erster Ordnung gehören beispielsweise Temperaturmeßelemente, optische Meßelemente, Magnetfeldmeßelemente, piezoelektrische, induktive und kapazitive Meßelemente. Das Zeitverhalten dieses Meßelementtyps läßt sich durch eine Differentialgleichung erster Ordnung mit einer Zeitkonstante T₁ beschreiben. Für weitere Details sei auf die diesbezügliche Literatur verwiesen, z.B. E. Schiessle, Sensortechnik- und Meßwertaufnahme, Vogel-Verlag, 1992.

Eine Eigenschaft dieser Meßelemente ist es, daß sie um die Zeitkonstante T₁ verzögert auf sprungartige Änderungen der zu messenden Größe reagieren. Solange sich der Wert der zu messenden Größe linear ändert, verbleibt dadurch eine konstante Abweichung zwischen dem Meßelementausgangssignal und dem tatsächlichen Wert der erfaßten Größe, die dem Produkt aus der Zeitkonstante T₁ mit der Steigung der linearen Veränderung entspricht. Bei sich dynamisch verändernder, zu messender Größe führt dieses Verzögerungsverhalten des Meßelementes folglich zwangsläufig zu Meßwertabweichungen. Der Einsatz eines Sensorsystems mit einem schneller reagierenden Meßelement, d.h. einem solchen mit geringerer Zeitkonstante, ist häufig praktisch nicht realisierbar oder jedenfalls mit relativ großem Aufwand verbunden. Ein Beispiel einer solchen, sich dynamisch ändernden Größe ist die Motoröltemperatur des Verbrennungsmotors eines Kraftfahrzeuges im laufenden Fahrbetrieb. Da vielfach Steuerungseingriffe in den Motorbetrieb, z.B. eine Zylinderabschaltung, in Abhängigkeit von der Motoröltemperatur erfolgen, besteht Bedarf an einer möglichst genauen dynamischen Motoröltemperaturerfassung.

Der Erfindung liegt daher als technisches Problem die Bereitstellung eines Sensorsystems der eingangs genannten Art zugrunde, das trotz Verwendung eines wenig aufwendigen Meßelementes auch für eine sich dynamisch ändernde, zu messende Größe ein relativ genaues Ausgangssignal liefert.

Die Erfindung löst dieses Problem durch die Bereitstellung eines Sensorsystems mit den Merkmalen des Anspruchs 1. Bei diesem System ist eine dem Meßelement nachgeschaltete Meßwertauswerteeinheit vorgesehen, welche zu den vom Meßelement gelieferten Meßwerten einen Korrekturwert addiert, der gleich dem Produkt der Meßelement-Zeitkonstante (T₁) mit einem gleitenden Mittelwert der nacheinander aufgenommenen Meßwerte ist. Der solchermaßen korrigierte Meßwert gibt bei Verwendung eines Meßelementes mit gegebener Zeitkonstante den tatsächlichen Wert der zu messenden Größe insbesondere auch bei dynamischer Änderung derselben deutlich besser wieder als der unkorrigierte, rohe Meßwert. Insbesondere folgt der korrigierte Meßwert schnellen Änderungen der zu messenden Größe rascher als der unkorrigierte Meßwert, indem auf den unkorrigierten, ggf. durch Mittelwertbildung geglätteten Meßwert ein gemittelter Korrekturwert hinzuaddiert wird, der das verzögerte Verhalten des Meßelementes berücksichtigt.

Ein nach Anspruch 2 weitergebildetes Sensorsystem ist vorteilhaft zur Erfassung der Motoröltemperatur für Verbrennungsmotorsysteme von Kraftfahrzeugen verwendbar, bei denen beispielsweise durch ein Motorsteuergerät eine Zylinderabschaltung in Abhängigkeit von dem vom Sensorsystem gelieferten Motoröltemperaturmeßwert vorgenommen wird. Vorteilhafterweise bildet das Motorsteuergerät gleichzeitig die Meßwertauswerteeinheit des Sensorsystems, die wahlweise als Hardware- oder Software-Baustein im Motorsteuergerät implementiert sein kann.

Eine bevorzugte Ausführungsform der Erfindung ist in den Zeichnungen dargestellt und wird nachfolgend beschrieben. Hierbei zeigen:
- Fig. 1: ein schematisches Blockdiagramm eines Sensorsystems zur Erfassung der Motoröltemperatur bei einem Verbrennungsmotor eines Kraftfahrzeuges und
- Fig. 2: ein Diagramm des Motoröltemperaturverlaufs für eine exemplarische Motorbetriebsphase zur Veranschaulichung der Funktion des Sensorsystems von Fig. 1.

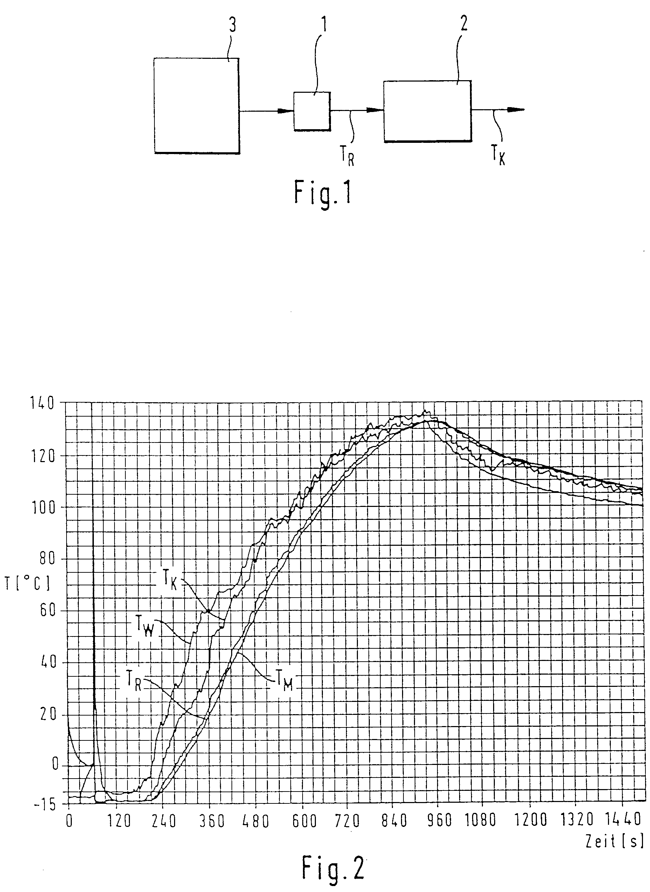

Das in Fig. 1 gezeigte Sensorsystem beinhaltet einen Motoröltemperaturfühler (1) als Meßelement, das ein PT1-Verhalten zeigt, und eine dem Temperaturfühler (1) nachgeschaltete Meßwertauswerteeinheit in Form eines Motorsteuergerätes (2), das in nicht weiter gezeigter Weise einen zugehörigen Kraftfahrzeug-Verbrennungsmotor (3) steuert. Zur Funktion des Motorsteuergerätes als Meßwertauswerteeinheit für die Motoröltemperatur ist in ihm ein entsprechendes Softwarepaket implementiert. Alternativ kann die Meßwertauswerteeinheit (2) auch als in das Motorsteuergerät integrierter oder als eigenständiger Hardware-Baustein realisiert sein.

Wegen des PT1-Verhaltens des Temperaturfühlers (1) weicht der von ihm gelieferte, rohe Meßwert (T_{R}) im allgemeinen von der wahren Motoröltemperatur (T_{W}) während rascher zeitlicher Änderungen der letzteren im dynamischen Motorbetrieb relativ stark ab, d.h. er folgt den Änderungen des wahren Öltemperaturwertes (T_{W}) nur um die charakteristische Zeitkonstante (T₁) verzögert. Das Motorsteuergerät berücksichtigt dies in seiner Funktion als nachgeschaltete Meßwertauswerteeinheit, indem sie auf den rohen Temperaturmeßwert (T_{R}) einen Korrekturwert (dT) zur Gewinnung des zur weiteren Motorsteuerung verwendeten, korrigierten Öltemperaturmeßwertes (T_{K}) hinzuaddiert.

Hierzu liest das Motorsteuergerät zunächst nacheinander mehrere aufeinanderfolgende Meßwerte (T_{R}) vom Temperaturfühler (1) ein und dämpft diese Meßwertfolge mittels einer gleitenden Mittelwertbildung, um Ausreißer zu eliminieren. Beispielsweise wird für einen neuen, gedämpften Meßwert der neue, rohe Meßwert mit zehn vorangegangenen, gedämpften Meßwerten gemittelt. Aus je zwei aufeinanderfolgenden, auf diese Weise gedämpften Meßwerten wird dann die zugehörige Steigung ermittelt, und die nacheinander erhaltenen Steigungswerte werden ihrerseits wieder durch eine gleichartige gleitende Mittelwertbildung gedämpft. Zur Bestimmung des Temperatur-Korrekturwertes (dT) bildet das Motorsteuergerät (2) dann das Produkt aus dem gedämpften Steigungswert zum zugehörigen Zeitpunkt mit der festen Zeitkonstante (T₁) des Temperaturfühlers (1). Mit diesem Korrekturwert (dT) wird nun der rohe Meßwert (T_{R}) berichtigt, d.h. der Korrekturwert (dT) wird zum gedämpften Meßwert (T_{R}) zur Gewinnung des von diesem Sensorsystem gewonnenen Öltemperaturwertes (T_{K}) addiert. Auf diese Weise gleicht das Motorsteuergerät (2) als Meßwertauswerteeinheit das Verzögerungsverhalten des Temperaturfühlers (1) mit der charakteristischen Zeitkonstante (T₁) aus, so daß der Temperaturausgangswert (T_{K}) des Sensorsystems (1, 2) dem wahren Öltemperaturwert (T_{W}) vor allem bei dynamischen, raschen Änderungen desselben deutlich näher kommt als der vom Temperaturfühler (1) gelieferte, rohe Meßwert (T_{R}).

In Fig. 2 ist diese Tatsache für eine Motorbetriebsphase in Form eines Kaltstarts bei einer Temperatur von -15°C mit anschließendem, scharfem Warmfahren veranschaulicht. Dazu sind im Diagramm von Fig. 2 der zu dieser Betriebsphase gehörige, wahre Motoröltemperaturwert (T_{W}), der vom Öltemperaturfühler gelieferte, rohe Öltemperaturmeßwert (T_{R}), der wie beschrieben durch Mittelung gedämpfte Öltemperaturmeßwert (T_{M}) und der korrigierte, sensorsystemausgangsseitig abgegebene Öltemperaturmeßwert (T_{K}) in ihrem zeitlichen Verlauf abgetragen. Aus Fig. 2 ergibt sich, daß der korrigierte Öltemperaturmeßwert (T_{K}) dem Verlauf des wahren Öltemperaturwertes (T_{W}) während dessen starkem Anstieg und während einer späteren Abklingphase deutlich rascher folgt als der rohe Öltemperaturmeßwert (T_{R}). Diese dynamisch genauere Motoröltemperaturerfassung hat beispielsweise Vorteile für Verbrennungsmotoranlagen, bei denen das Motorsteuergerät (2) unter entsprechenden Bedingungen eine Zylinderabschaltung des Verbrennungsmotors (3) zur Kraftstoffeinsparung vornimmt. Diese Zylinderabschaltung kann nach dem Start des Motors (3) aufgrund der Tatsache, daß der korrigierte Öltemperaturmeßwert (T_{K}) dem wahren Öltemperaturwert (T_{W}) deutlich schneller folgt als der vom Öltemperaturfühler (1) gelieferte, rohe Temperaturmeßwert (T_{R}), früher einsetzen.

Es ist anzumerken, daß diese für die Motorsteuerung vorteilhafte, genauere dynamische Motoröltemperaturerfassung nicht durch einen aufwendigeren Temperaturfühler mit geringerer Zeitkonstante, sondern durch eine weniger aufwendige, nachgeschaltete, geeignete Meßwertauswertung erzielt wird, die wahlweise in Hardware oder Software realisiert sein kann. Es versteht sich, daß erfindungsgemäße Sensorsysteme nicht nur für den beschriebenen Fall der Motoröltemperaturerfassung, sondern überall dort nutzbringend eingesetzt werden können, wo Bedarf an einer relativ genauen dynamischen Erfassung einer zu messenden Größe mittels eines relativ einfachen Meßelementes mit PT1-Verhalten besteht.

## Patentansprüche

1. Sensorsystem mit
- einem Meßelement mit PT1-Verhalten,
**gekennzeichnet durch**
- eine dem Meßelement (1) nachgeschaltete Meßwertauswerteeinheit (2), welche zu den vom Meßelement gelieferten Meßwerten (T_{R}) einen Korrekturwert (dT) addiert, der gleich dem Produkt der Meßelement-Zeitkonstante (T₁) mit einem gleitenden Steigungsmittelwert der nacheinander aufgenommenen Meßwerte ist.

2. Sensorsystem nach Anspruch 1, weiter
**dadurch gekennzeichnet,** daß
das Meßelement ein Temperaturmeßfühler (1) zur Motoröltemperaturmessung ist und die Meßwertauswerteeinheit von einem Motorsteuergerät (2) gebildet ist.
